# EUROPEAN PATENT SPECIFICATION

(11) **EP 2 254 720 B1**
(45) Date of publication and mention of the grant of the patent: **13.06.2018**
(21) Application number: 08872931.4
(22) Date of filing: 23.12.2008
(51) Int. Cl.: B23K 9/04, B23K 10/02, B23K 15/00, B23K 26/34, B23K 31/00, F16L 1/19, F16L 1/20

(54) **METHOD OF LAYING A PIPELINE WITH FORMING A COLLAR ON A TUBULAR COMPONENT THROUGH DEPOSITING OF WELD METAL AND MACHINING THIS DEPOSIT INTO A COLLAR**
VERFAHREN ZUM LEGEN EINER PIPELINE UNTER BILDUNG EINES BUNDS AN EINER RÖHRENFÖRMIGEN KOMPONENTE DURCH ABLAGERUNG VON SCHWEISSMETALL UND BEARBEITUNG DIESER ABLAGERUNG ZU EINEM BUND
PROCÉDÉ DE POSE D'UN PIPELINE AVEC FORMATION D'UN COLLIER SUR UN COMPOSANT TUBULAIRE PAR DÉPOSITION DE MÉTAL DE SOUDAGE ET USINAGE DE CE DÉPÔT SOUS LA FORME D'UN COLLIER

(30) Priority: 26.02.2008 GB 0803421
(43) Date of publication of application: 01.12.2010
(73) Proprietor: Pipeline Technique Limited, Huntly Aberdeenshire AB54 4PS (GB)
(72) Inventor: HUTT, Graham, 34320 Nizas (FR)
(74) Representative: Murgitroyd & Company
(86) International application number: PCT/GB2008/051229
(87) International publication number: WO 2009/106789

(56) References cited:
- US-A- 2 491 878
- US-A- 4 857 693
- US-A- 5 837 960
- US-A1- 2001 033 773
- US-B1- 6 179 523
- DATABASE WPI Week 200671 Thomson Scientific, London, GB; AN 2006-680953 XP002522256 -& CN 1 759 979 A (HARBIN TURBINE CO LTD) 19 April 2006 (2006-04-19)

## Description

The present invention relates to a method of laying a pipeline according to the preamble of claim 1 (see, for example, US2001/033773 A1). Fluids are commonly transported across large distances through pipelines formed of discrete pipe sections connected together end to end. In the transportation of hydrocarbons between off-shore facilities and on-shore processing plats, the pipelines can extend for many hundreds or in some cases thousands of miles. Before any fluids can be transported, the pipeline must be laid across the seabed.
One known system of pipe laying which is commonly employed in the construction of deepwater pipelines or riser systems is a J-laying method. Lengths of pipe are stored on a floating vessel. The pipeline is supported in a vertical or near vertical orientation on the vessel and extends from the vessel to the seafloor where it rests on the seabed. Each new pipe is transferred into a vertical orientation where it is welded onto the top-most pipe and the pipe string is lowered to bring the top of the new pipe into position for connection of a further pipe. In this system a mechanical device is incorporated for restraining the tension in the pipe catenary between the lay ship and the seabed.
Due to the very high tensions encountered in deepwater pipe laying, it is often necessary to provide a raised shoulder on the pipe end to be supported by the restraining device to prevent slippage. It is customary to use so-called J-lay collars for this purpose and typically these are machined from a forging or heavy wall section of pipe and then welded to the pipe to be supported.
Since the J-lay collars remain as permanent items on the completed pipeline, they must conform to specified metallurgical, mechanical and structural integrity requirements that are similar or exceed to the pipeline material itself.
Attainment of these desired properties can be problematic and particularly when very heavy wall thickness, high strength and/or special corrosion resistant alloy materials are needed.

The present invention aims to provide a method of laying a pipeline which addresses this problem. In other situations, a carbon steel pipe material may be metallurgically or mechanically lined with a corrosion resistant alloy (CRA) to provide protection against the fluids in the pipeline. In such cases, the J-lay collars need to be similarly protected by applying a compatible CRA material to the inside surface in the form of a welded overlay. The irregular penetration and fusion profile of the overlay can give rise to difficulties when performing non-destructive testing of the circumferential weld used to connect the j-lay collar and the pipe.

It is therefore an object of the present invention to provide a method of laying a pipeline which also addresses this problem.

According to the present invention there is provided a method of laying a pipeline as defined in claim 1. By machining the collar directly into weld material deposited onto the surface of the tubular component, a separate J-Lay collar is not required. Such a collar would normally be welded onto the end of a pipe and therefore this can reduce the equipment which is needed on board a pipe laying vessel which represents a significant cost, time and weight saving. Preferably the weld metal is deposited onto the surface of the pipe by a direct deposition operation.
Advantageously, the weld metal is deposited onto the pipe in a specified deposition sequence.
This allows the characteristics of the surface profile to be closely controlled by the user and means that different J-Lay collars having different material characteristics need not be carried on board the pipe laying vessel.
The deposit weld metal and welding method can be selected to give specified technological properties in the deposit without causing unacceptable degradation of the parent material.
According to one embodiment of the invention, the deposit is made by rotation or translation of the tubular component past a welding head.

Alternatively the deposit is made by rotation or translation of a welding head past the tubular component.

In some embodiments a combination of rotation or lateral translation of the tubular component and/or the welding head may be used.

One embodiment of the invention will now be described with reference to the attached drawings in which:-
Fig. 1 is a schematic side view of a typical J-Lay collar welded to the end of a pipe, and
Fig. 2 is a schematic side view of a profile to be machined on a tubular component in accordance with one aspect of the method of the present invention.

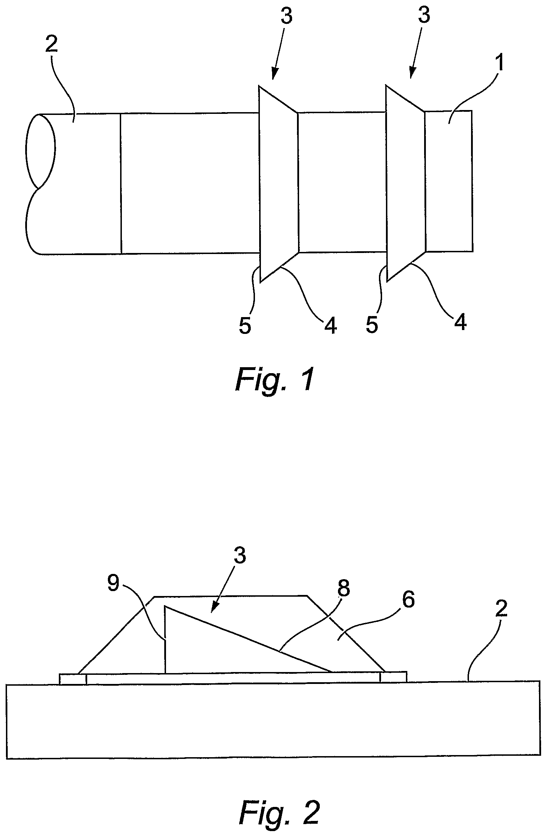

Turning now to the drawings, Fig. 1 shows a schematic side view of a typical J-Lay collar 1 which is welded to the free end of a pipe 2. The collar 1 generally comprises a section of pipe having substantially the same diameter as the pipeline to which it is to be welded but having a shorter length.

In the example illustrated, two profiles 3 are provided on the collar. Each profile comprises an outwardly flared flange 4 which terminates in a shoulder 5 via which the collar can be supported in a vertical position.

The present invention provides a means of developing the required geometric profile to enable a pipe to be supported in a vertical or near vertical position during a laying operation. This is achieved by direct deposition of weld metal onto the surface of the pipe in a specified location and deposition sequence.

The position of the profile is selected and weld material is deposited circumferentially around the surface of the pipe. The amount of material deposited is selected to ensure that the resulting deposition has sufficient dimensions as to fully encapsulate the desired profile on the pipe.

The deposit may be made by any combination of rotation or lateral translation of the pipe or welding equipment to develop the desired deposition pattern. For example, in one embodiment, a pipe may be rotated and/or translated past a static welding head. In an alternative embodiment, the pipe may be held static and the welding head may be translated and/or rotated past the static pipe. As a further alternative, both the pipe and the welding head may be translated and/or rotated with respect to one another.

The welding equipment may comprise one or more welding heads operating simultaneously or in a synchronised pattern to increase the rate of deposition.

An expandable and/or water cooled mandrel may be located in the bore of the tubular component to increase the rate of heat abstraction. This may assist to prevent overheating of the tubular component and allow for continuous welding to be carried out. Such an expanding mandrel may also be adapted to apply a radial force internally of the tubular component in order to resist distortion and shrinkage of the bore of the tubular component.

The location in which weld material is deposited onto the pipe will be a factor in determining which embodiment is preferred. For example, on a pipe laying vessel where space may be at a premium, the most compact deposition operation will be used. Alternatively, in an on-shore facility where additional space is available, different considerations will affect the selection of deposition method.
Once the deposition is complete, the required profile is machined out of the deposited material using a known process. Machining may for example include any metal removing or shaping technique or any grinding technique for forming the profile on the surface of the tubular component.
Fig. 2 is a schematic cross-sectional view of a length of pipe 2 upon which weld material 6 has been deposited to a sufficient depth around the outer surface of the pipe to encapsulate the desired profile 7 which forms a collar 1' shown on the pipe in broken lines. In this embodiment, the collar comprises an outwardly flared flange 8 which terminates in a shoulder 9 via which the resulting profile can be used to support the pipe in a vertical or near vertical position.

The so produced geometric form may be machined (from the near net shape) to a more precise profile if required. According to the present invention, the collar is formed directly on the end of the pipe to be installed in the pipeline thus eliminating the need for a separate j-lay collar having the appropriate profile formed thereon to be welded onto the end of the pipe before installation.

Fig.2 shows a pipe with a single profile formed on the outer surface thereof. It will of course be appreciated that as the method of the present invention does not require casting of the profile onto the surface of the pipe, any number of profiles may be provided on a pipe. In some embodiments, different profiles may be machined onto a length of pipe to perform different functions or to provide different properties to the pipe.

The method can be applied to any suitable substrate material including but not limited to carbon steel or CRA in wrought, forged, extruded or cast form.

The deposit can be applied to a pipe or sub-component that already has an internal CRA layer or lining thus avoiding the need to overlay the inner surface as a separate operation. The characteristics of such existing layers or linings may be selected to be more favourable for inspection of subsequent circumferential welds.

The deposit may be made using any weldable pipe or sub-component materials in wrought, cast, forged, seam welded or seamless tubular form. Such materials may be in solid or have an internal layer or lining of CRA.

The deposit may be made by any suitable means of fusion and weld metal deposition process

The deposit may be made using any suitable welding consumable(s) deposited in individual weld runs or layers with a single type/classification of consumable per run or layer or a mixture of consumables to develop specific technological properties.

It is envisaged that the method of the present invention may be operated on a pipe laying vessel wherein lengths of pipe are transported to the appropriate position for connection into an existing pipeline and the require profile is formed onto the surface of the pipe on board the vessel. In this case the vessel would carry both the weld deposition apparatus and also the machining apparatus for form the required profile on the surface of the pipe locally.
The deposit can be applied to the plain surface of a pipe or tubular component or to modify any features pre-formed by forging and/or machining of the pipe. Therefore the present invention also enables the existing profile of a tubular member to be modified so that if the requirements of the profile change at different times during the pipe laying procedure, the profile of subsequent tubular components can be modified on board a pipe laying vessel to accommodate the changing requirements of the profile.

The present invention finds application in the field of pipeline laying and particularly in J-Lay operations where a pipeline is suspended in the water from a surface vessel or platform and extends to the sea bed where it is laid along a selected route.

## Claims

1. A method of laying a pipeline comprising a plurality of tubular components (2), **characterised by** said method comprising the steps of depositing directly a weld metal (6) onto the surface of a tubular component (2) in a position spaced from the end of the tubular component (2), machining a collar (8,9) into the weld material (6), suspending the tubular component (2) in a vertical or near vertical position and supporting the tubular component (2) by the collar (8,9), welding a further of said tubular components (2) to the free end of the first tubular component (2) thus eliminating the need of a j-lay collar having the appropriate profile formed thereon to be welded onto the end of the pipe before installation.

2. A method according to claim 1 wherein said weld metal (6) is deposited onto the surface of the tubular component (2) via a plurality of welding heads, to increase the rate of deposition.

3. A method according to claim 2 wherein the welding heads operate simultaneously.

4. A method according to claim 2 wherein the welding heads operate in a synchronised pattern.

## Patentansprüche

1. Ein Verfahren zum Verlegen einer Rohrleitung, beinhaltend eine Vielzahl von rohrförmigen Komponenten (2), **dadurch gekennzeichnet, dass** das Verfahren die folgenden Schritte beinhaltet: direktes Abscheiden eines Schweißmetalls (6) auf der Oberfläche einer rohrförmigen Komponente (2) in einer von dem Ende der rohrförmigen Komponente (2) beabstandeten Position, maschinelles Fertigen eines Bunds (8, 9) in das Schweißmaterial (6), Aufhängen der rohrförmigen Komponente (2) in einer vertikalen oder nahezu vertikalen Position und Stützen der rohrförmigen Komponente (2) durch den Bund (8, 9), Schweißen einer weiteren der rohrförmigen Komponenten (2) an das freie Ende der ersten rohrförmigen Komponente (2), wodurch die Notwendigkeit, dass vor der Installation ein J-Lay-Bund mit dem darauf gebildeten geeigneten Profil an das Ende des Rohrs geschweißt werden muss, entfällt.

2. Verfahren gemäß Anspruch 1, wobei das Schweißmetall (6) auf der Oberfläche der rohrförmigen Komponente (2) über eine Vielzahl von Schweißköpfen abgeschieden wird, um die Abscheidungsgeschwindigkeit zu erhöhen.

3. Verfahren gemäß Anspruch 2, wobei die Schweißköpfe gleichzeitig arbeiten.

4. Verfahren gemäß Anspruch 2, wobei die Schweißköpfe in einem synchronisierten Muster arbeiten.

## Revendications

1. Une méthode de pose d'un pipeline comprenant une pluralité de composants tubulaires (2), **caractérisée par le fait que** ladite méthode comprend les étapes consistant à déposer directement un métal de soudure (6) sur la surface d'un composant tubulaire (2) à un emplacement espacé de l'extrémité du composant tubulaire (2), à façonner un collier (8, 9) dans le matériau de soudure (6), à suspendre le composant tubulaire (2) dans une position verticale ou presque verticale et à soutenir le composant tubulaire (2) par le collier (8, 9), à souder un autre desdits composants tubulaires (2) à l'extrémité libre du premier composant tubulaire (2), supprimant ainsi la nécessité de souder sur l'extrémité de la conduite, avant son installation, un collier de pose en J ayant le profil approprié formé sur celui-ci.

2. Une méthode selon la revendication 1 dans laquelle un métal de soudure (6) est déposé sur la surface du composant tubulaire (2) par le biais d'une pluralité de têtes de soudage, pour augmenter la vitesse de dépôt.

3. Une méthode selon la revendication 2 dans laquelle les têtes de soudage fonctionnent simultanément.

4. Une méthode selon la revendication 2 dans laquelle les têtes de soudage fonctionnent selon un mode synchronisé.
